# EUROPEAN PATENT APPLICATION

(11) **EP 1 942 339 A1**
(43) Date of publication of application: **09.07.2008**
(21) Application number: 06781995.3
(22) Date of filing: 31.07.2006
(51) Int. Cl.: G01N 27/62

(54) **METHOD OF CALIBRATING MASS DETECTED BY MASS SPECTROGRAPH**

(30) Priority: 07.09.2005 JP 2005258684
(71) Applicant: Human Metabolome Technologies, Inc., Tsuruoka-shi, Yamagata 997-0052 (JP)
(72) Inventor: SOGA, Tomoyoshi, Tsuruoka-shi, Yamagata 997-0017 (JP); KAKAZU, Yuji, Tsuruoka-shi, Yamagata 997-0017 (JP); TOMITA, Masaru, Fujisawa-shi, Kanagawa 252-8520 (JP); ISHIKAWA, Takamasa, Tsuruoka-shi, Yamagata 997-0052 (JP)
(74) Representative: Grünecker, Kinkeldey, Stockmair & Schwanhäusser Anwaltssozietät
(86) International application number: PCT/JP2006/315117
(87) International publication number: WO 2007/029431

(57) **Abstract**

In a mass spectrometry system designed so as to feed a solution to an interface 20 between a separation analysis instrument (10) and a mass spectrometer 50, an internal standard for mass calibration is mixed with the solution (an electrophoresis buffer solution 16 of capillary electrophoresis apparatus 10, a mobile phase of liquid chromatograph or a sheath solution for obtaining an electrical contact of the separation analysis instrument with the mass spectrometer), and a detected mass is calibrated. Thereby, it is possible to simply and conveniently calibrate the mass of a substance to be measured without using a calibration spray device or employing a post column introduction method.

## Description

### [Technical Field]

The present invention relates to a method for calibrating detected mass in a mass spectrometry system. In particular, it relates to a method for calibrating detected mass in a mass spectrometry system, which is capable of simply and conveniently performing the calibration of mass indispensable for capillary electrophoresis (CE) - mass spectrometer (MS) and liquid chromatograph (LC) - mass spectrometer (MS) frequently used in metabolome research.

### [Background Art]

In recent years, metabolome has been actively researched to result in frequent use of CE-MS and LC-MS. The mass of a target substance measured by MS is greatly influenced by a change in conditions of MS such as the degree of vacuum and temperature, etc. Therefore, in order to accurately measure the mass of the target substance, it is absolutely necessary to make frequent mass calibrations of MS with an internal standard (hereinafter, referred to as IS) for mass calibration.

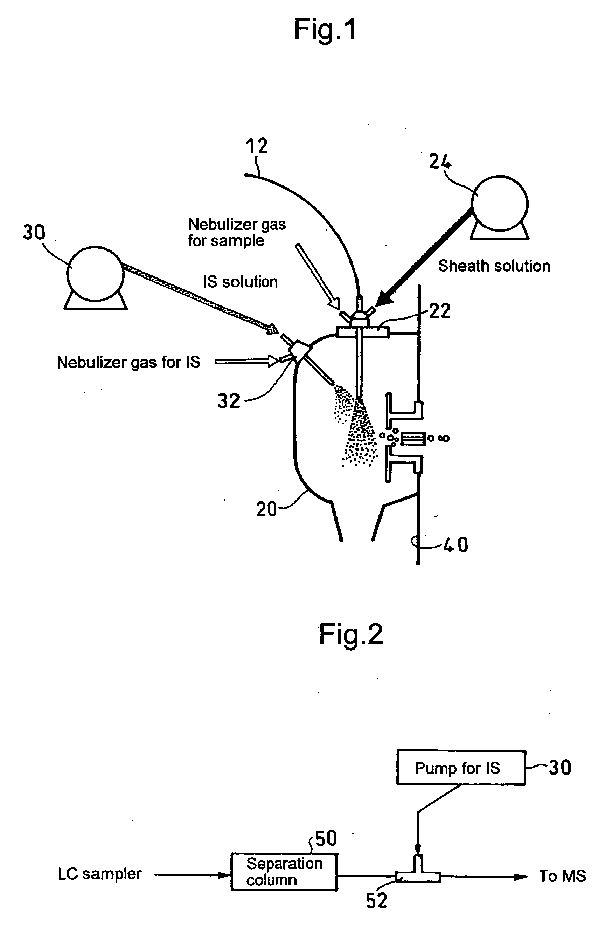

In recent years, an electrospray ionization (ESI) method has been widely used as an interface for separation analysis instruments such as liquid chromatograph (LC), capillary electrophoresis (CE) and ion chromatograph (IC) into MS. As illustrated in Fig. 1, the above method is to spray a liquid current produced, for example, by a capillary 12 of a separation analysis instrument into an interface (also referred to as an ionization portion) 20 by a sampling spray device 22, thereby effecting ionization.

As described in Palmer, M.E., et al. Rapid Commun. Mass Spectrum. (2003),13,256-263, mass measured by using MS40 connected to the downstream side of the interface 20 (on the right side in the drawing) is calibrated in general using a plurality of spray devices for sampling and calibration IS. In other words, an IS pump 30 is used to spray an IS solution from a separately-installed IS spray device 32 into the interface 20, thereby measuring a sample and IS at the same time. Then, the mass calibration is performed while data is collected or at the time of analysis.

However, a method using a plurality of spray devices for sampling and calibration IS also requires another liquid-feeding pump 30 for spraying IS and nebulizer gas for spraying, thereby making the interface 20 complicated in structure. Further, a problem is posed that where a plurality of spray devices are used, they interfere with each other to decrease the sensitivity.

On the contrary, some of the commercially available interfaces are provided with only one spray device. Thus, they have an inherent difficulty in making a measurement, which requires mass calibration. In the case of LC, as described in Nassar, A. -E, F. & Adams, P. E., Current Drug Metabolism (2003), 4 (4), 259-271 and shown in Fig. 2, after separation by using a separation column 50, an IS solution is mixed under pressure through a T-connector 52 using a pump 30, by which measurement can be made at the same time with samples.

However, a problem is posed that a post column introduction method requires complicated piping, which may adversely influence the separation.

### [Disclosure of the Invention]

The present invention has been made for solving the above-described conventional problems, an object of which is to eliminate the necessity of a spray device for calibration and also simply and conveniently calibrate the mass of a measured substance without using a post column introduction method.

The present invention solves the above-described problems in a mass spectrometry system in which a solution is fed to an interface between a separation analysis instrument and a mass spectrometer by mixing the solution with an internal standard for mass calibration to calibrate the detected mass.

A plurality of internal standards may be used.

Further, the solutionmaybe an electrophoresisbuffer solution of a capillary electrophoresis apparatus, a mobile phase of (high performance) liquid chromatograph or a sheath solution for obtaining electrical contact of a separation analysis instrument and a mass spectrometer.

In CE, an electrophoresis buffer solution is fed from a capillary to an interface. Consequently, the inventor has devised a method in which IS for mass calibration is mixed with the electrophoresis buffer solution.

Further, unlike LC, electrical contact is essential for connecting CE with MS. In order to obtain the contact and also attain a stable spraying, fed is an electrolytic solution, which is called a make-up solution (also called a sheath solution). Consequently, the inventor has also devised a method in which IS for mass calibration is mixed with the sheath solution.

These methods are usable in making a calibration without reduction in sensitivity also in CE-MS in which a post column introduction method is difficult.

Further, MS is also applicable for any type of spectrometer such as a quadrupole mass spectrometer (QMS), ion trap mass spectrometer (ITMS), time of flight mass spectrometer (TOF-MS) and Fourier transform ion cyclotron mass spectrometer (FT-ICRMS).

These methods are usable in mass calibration of measuring methods in combination with any type of separation and analysis with MS such as LC/MS and microchip MS.

The present invention is capable of calibrating simply and conveniently the mass of a substance to be measured without requiring a spray device for calibration or employing a post column introduction method.

In particular, where a plurality of IS is used with some IS with low molecular weight to IS with high molecular weight mixed, a wider range of masses can be calibrated.

### [Brief Description of the Drawings]

Fig. 1 is a sectional view showing a concept of a plurality of conventional spray ion sources.
Fig. 2 is a flow path diagram showing a concept of a conventional post column introduction method.
Fig. 3 is a sectional view showing a constitution of an embodiment of the present invention.
Fig. 4 is a drawing showing a measurement example of a mass difference in Embodiment 2 .
Fig. 5 is a drawing showing improvement in sensitivity.

### [Best Mode for Carrying Out the Invention]

Hereinafter, a detailed explanation will be made for the embodiments of the present invention by referring to the following drawings.

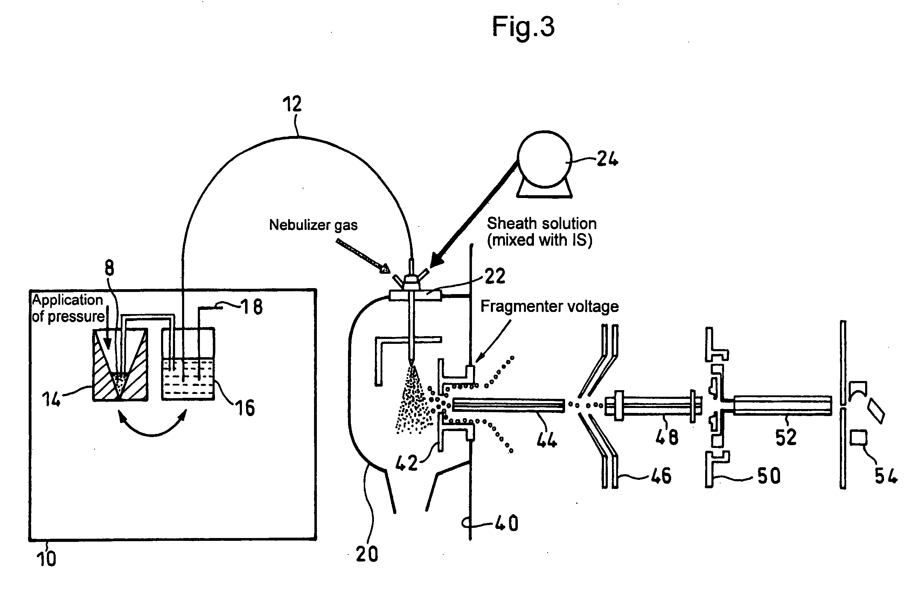

Embodiment 1 of the present invention is that in which the present invention is applied to CE-MS. As shown in Fig. 3, it is a mass spectrometry system, which is constituted with a conventional capillary electrophoresis apparatus (CE) 10 provided with a capillary 12 for separating a sample 8, an electrophoresis buffer solution (sometimes, referred to as buffer) 16 introduced into the capillary 12 together with the sample 8 in a sample container 14 to separate the sample 8, and an electrode 18 inserted into the buffer 16 for applying a high voltage to both ends of the capillary 12, an interface 20 provided with a sampling spray device 22 for spraying a liquid current produced from the capillary 12 to effect ionization, the liquid current is introduced into the buffer 16 by sealing the sample container 14 with a lid and giving pressure thereto, and a sheath solution pump 24, and a mass spectrometer (MS) 40 for subjecting the sample sprayed by the interface 20 to mass analysis, in which IS is mixed with the buffer 16.

In the drawing, the reference numeral 42 represents a sampling cone in which molecules ionized by the interface 20 are sampled and direction of kinetic energy is aligned, by accelerating ions to collide with nitrogen gas and, fragmenter voltage is applied for producing fragment ions, and dry gas (for example, nitrogen gas) for volatilizing a solvent coming from CE 10 is supplied; 44, an ion lens for converging ions, which have passed through the sampling cone 42; 46, a skimmer cone; 48, a pre-filter; 50, a barrier for preventing the degree of vacuum from being lowered; 52, a mass filter for selecting the mass of ions; 54, a detector for counting ions of measured mass-, which have passed through the mass filter 52.

Further, Embodiment 2 of the present invention is a mass spectrometry system similar to that of Embodiment 1, in which, as shown in Fig. 3, an IS-mixed sheath solution is supplied from the sheath solution pump 24 to the spray device 22 of the interface 20.

In addition, Embodiment 1 and Embodiment 2 may be used together to mix IS with both the buffer 16 and the sheath solution.

In this instance, a plurality of IS can be easily supplied to MS40.

In Embodiment 2, the CE 10 was used to make analysis under conditions in which a fused silica capillary (50 µm in inner diameter; 350 µm in outer diameter; 100 cm in full length) was used as the capillary 12. 1M formic acid (approximately 1.8, pH) was used as the buffer 16. Measurement was made at an applied voltage of + 30 kV and a capillary temperature of 20°C. Apressuremethodwasemployed to infuse samples for 3 seconds at 50 mbar.

The MS 40 was used to make an analysis under conditions in which ionization voltage was set to be 4 kV and fragment voltage was set to be 70 V in a positive ion mode. Nitrogen was used as dry gas to make a measurement at 300°C. Further, a 50% methanol solution was used as a sheath solution, and reserpine (m/z 609.2807) was mixed as IS so as to give 1 µM. All data obtained from this mass was subjected to automatic calibration.

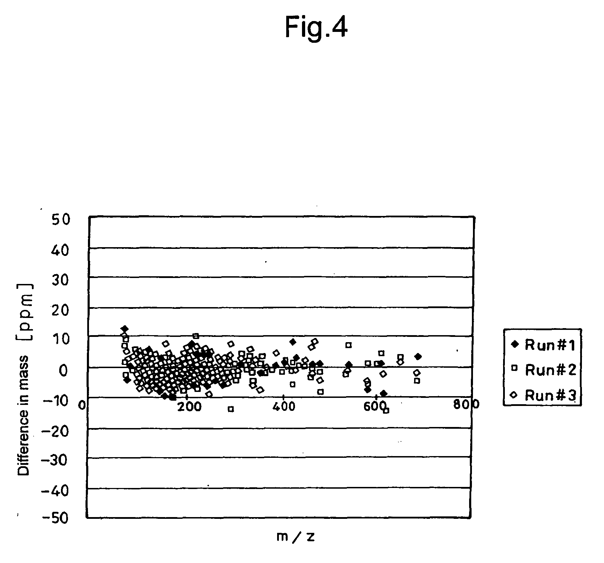

Mass calibration was performed according to the present invention to measure a mixture made up of 338 compositions (concentration, 20 µM). The measurement was made three times separately at certain time intervals (Run #1, #2 and #3). As shown in Fig. 4, a mass difference was corrected to 10 ppm or less in substantially all the mass measuring range from mass 50 to 700.

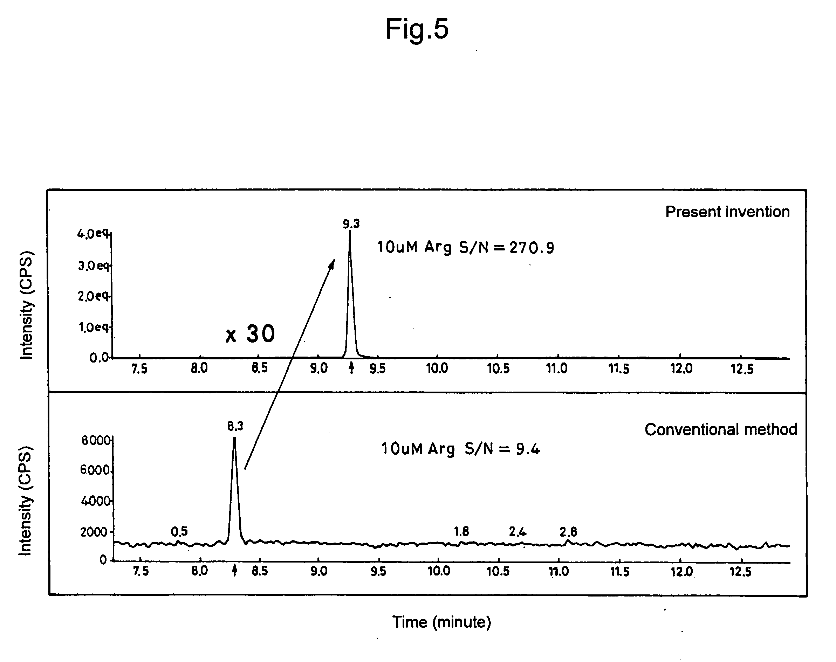

As described so far, mass calibration can be made without using a calibration spray device. Thus, eliminated is a necessity for additional devices for correction spray such as additional pump and gas. There is found no interference resulting from a plurality of spray devices or a resulting deterioration in sensitivity. Thus, as shown in Fig. 5 as an example of measurement using a 10 µM arginine standard solution, the sensitivity is increased approximately 30 times as compared with a conventional method.

### [Industrial Applicability]

The present invention has found applications in various fields such as metabolomics in general, proteomics, biotechnology, metabolic engineering, chemistry, agricultural sciences, pharmaceutical sciences, food processing and medicine, in addition to metabolome research.

## Claims

1. A method for calibrating detected mass in a mass spectrometry system wherein a solution is fed to an interface between a separation analysis instrument and a mass spectrometer, wherein an internal standard for mass calibration is mixed with the solution to calibrate the detected mass.

2. The method for calibrating detected mass in a mass spectrometry system as set forth in claim 1, wherein a plurality of the internal standards are used.

3. The method for calibrating detected mass in a mass spectrometry system as set forth in claim 1 or claim 2, wherein the solution is an electrophoresis buffer solution in a capillary electrophoresis apparatus.

4. The method for calibrating detected mass in a mass spectrometry system as set forth in claim 1 or claim 2, wherein the solution is a mobile phase of a liquid chromatograph.

5. The method for calibrating detected mass in a mass spectrometry system as set forth in claim 1 or claim 2, wherein the solution is a sheath solution for obtaining an electrical contact of a separation analysis instrument and a mass spectrometer.
